(19) Europäisches Patentamt / European Patent Office / Office européen des brevets

(11) **EP 2 713 498 A1**

(12) **EUROPEAN PATENT APPLICATION**
published in accordance with Art. 153(4) EPC

(43) Date of publication:
**02.04.2014 Bulletin 2014/14**

(51) Int Cl.:
***H02M 7/48*** *(2007.01)*

(21) Application number: **13752801.4**

(22) Date of filing: **28.01.2013**

(86) International application number:
**PCT/CN2013/071025**

(87) International publication number:
**WO 2014/015667 (30.01.2014 Gazette 2014/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2012  CN 201210261448**

(71) Applicant: **Huawei Technologies Co., Ltd.
Shenzhen, Guangdong 518129 (CN)**

(72) Inventors:
• **ZHANG, Zhen
Shenzhen
Guangdong 518129 (CN)**

• **LIU, Yunfeng
Shenzhen
Guangdong 518129 (CN)**
• **LIU, Xiaoqin
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(54) **SPACE VECTOR PULSE WIDTH MODULATION METHOD AND APPARATUS**

(57)  The present invention relates to the field of pulse width modulation technologies, and discloses a method and an apparatus for space vector pulse width modulation. The main idea of the present invention is equivalently injecting a harmonic component into an output of an inverter, and configuring action durations of redundant small vectors to make an instantaneous common-mode voltage component of the output of the inverter and an instantaneous common-mode voltage component of the harmonic component that is equivalently injected into the output of the inverter cancel each other out, so as to eliminate the instantaneous common-mode voltage component of the output of the inverter. According to the method, the present invention further provides a corresponding apparatus for space vector pulse width modulation. Adopting the present invention can effectively reduce the common-mode voltage component in the output voltage of the inverter, keep high utilization of direct current bus voltage, and improve system efficiency.

FIG. 1

EP 2 713 498 A1

**Description**

This application claims priority to Chinese Patent Application No. 201210261448.X, filed with Chinese Patent Office on July 26, 2012 and entitled "METHOD AND APPARATUS FOR SPACE VECTOR PULSE WIDTH MODULATION", which is incorporated herein by reference in its entirety.

**TECHNICAL FIELD**

The invention relates to the field of pulse width modulation technologies, and in particular, to a method and an apparatus for space vector pulse width modulation.

**BACKGROUND**

A space vector pulse width modulation (Space Vector Pulse Width Modulation, short for SVPWM) technology takes an ideal flux circle of a stator of a three-phase symmetrical motor when power is provided by three-phase symmetrical sine-wave voltage as a reference standard, uses actual flux generated by using different switching modes of an inverter to approach reference circle flux, and determines to turn on or turn off the inverter based on a comparison result between them to generate a PWM waveform.

A conventional SVPWM technology mainly takes an input differential-mode signal as a modulation object, and output PWM common-mode voltage is not a control object, where relatively high common-mode voltage results in adverse effects including earth leakage current increase and serious electromagnetic interference in the field of general inverters and photovoltaic, or in other fields that have high requirements for common-mode voltage.

In a patent with publication No. CN2794029, a general inverter with a feedback active low-pass filter apparatus that can filter common-mode voltage is disclosed. A method that uses the feedback active low-pass filter apparatus and other circuit modes to suppress common-mode voltage adds hardware in a circuit, so the structure of the circuit is complicated, large and not flexible enough.

Therefore, in an actual application, a common-mode voltage suppression method that is improved based on a control strategy is generally adopted, and this kind of software implementation manner is simple, flexible and does not need extra hardware. In an SVPWM common-mode voltage suppression method that is improved based on the control strategy, it is common to select redundant small vectors that have relatively low or zero common-mode voltage in 27 basic vectors to synthesize a target voltage vector, so as to suppress or eliminate output common-mode voltage of a converter. In the method, a relatively good common-mode voltage feature can be obtained, but only part of basic vectors are selected, so utilization of direct current bus voltage decreases and content of each harmonic increases, which affects pulse-width modulation.

**SUMMARY**

A technical problem to be solved by embodiments of the present invention is to provide a method and an apparatus for space vector pulse width modulation, which not only reduce output common-mode components, but also do not result in decreasing the utilization of direct current bus voltage, and increasing output harmonic content.

A first aspect of the present invention provides a method for space vector pulse width modulation, including:

equivalently injecting a harmonic component into an output of an inverter;
calculating an action duration, of each space vector of an output voltage space vector of the inverter, for synthesizing each space vector of the output voltage space vector of the inverter, where the action duration of each space vector includes an action duration $T_1$ of a first space vector, an action duration $T_2$ of a second space vector, and an action duration $T_3$ of a third space vector, and the first space vector includes a first redundant small vector and a second redundant small vector that are mutually redundant;
configuring an action duration $T_a$ of the first redundant small vector and an action duration $T_b$ of the second redundant small vector, so as to make an instantaneous common-mode voltage component of the output of the inverter and an instantaneous common-mode voltage component of the harmonic component that is equivalently injected into the output of the inverter cancel each other out, and the action duration $T_a$ of the first redundant small vector and the action duration $T_b$ of the second redundant small vector satisfy: $T_a + T_b = T_1$; and
generating a pulse width modulation control signal according to the action duration of each space vector, the action duration $T_a$ of the first redundant small vector and the action duration $T_b$ of the second redundant small vector.

In a first feasible implementation manner, an implementation manner of the equivalently injecting a harmonic component into an output of the inverter is: adding a harmonic component into a modulation wave.

With reference to the first feasible implementation manner of the first aspect, in a second feasible implementation manner, the inverter is a three-phase three-level inverter and the second space vector is a zero space vector, and a preferable method of the configuring an action duration $T_a$ of the first redundant small vector and an action duration $T_b$ of the second redundant small vector is:

modifying a calculation formula for the instantaneous common-mode voltage component of the output of the inverter, where the modified calculation formula for the instantaneous common-mode voltage component of the output of the inverter is:

$$V_{com|svpwm} = N_1 \lambda T_1 V_{dc} + N_2 (1 - \lambda) T_1 V_{dc} + N_3 T_3 V_{dc}$$

where $V_{com|svpwm}$ is the instantaneous common-mode voltage component of the output of the inverter, $\lambda$ is a coordinate factor, $N_1$ is a common-mode contribution parameter of the first redundant small vector, $N_2$ is a common-mode contribution parameter of the second redundant small vector, $N_3$ is a common-mode contribution parameter of the third space vector, and $V_{dc}$ is direct current bus voltage; and
calculating a value of the coordinate factor according to a principle of the making the instantaneous common-mode voltage component of the output of the inverter and the instantaneous common-mode voltage component of the harmonic cancel each other out, specifically:
a calculation formula for the instantaneous common-mode voltage component $V_{com|spwm}$ of the harmonic component that is equivalently injected into the output of the inverter is:

$$V_{com|spwm} = bm \cos(n\theta) \frac{1}{2} V_{dc} T$$

where $n$ is a harmonic number, $m$ is a modulation ratio, $b$ is a ratio of a harmonic component to a fundamental wave, and $V_{dc}$ is direct current bus voltage; and the value of the coordinate factor $\lambda$ is calculated according to $V_{com|svpwm}$ $+V_{com|spwm}=0$; and
configuring the action duration $T_a$ of the first redundant small vector and the action duration $T_b$ of the second redundant small vector according to the value of the coordinate factor $\lambda$, specifically: $T_a=T_1*\lambda$ and $T_b=T_1*(1-\lambda)$.

With reference to the first feasible implementation manner and the second feasible implementation manner of the first aspect, in a third feasible implementation manner, a third harmonic is preferably selected as the harmonic that is injected into the output of the inverter.
A second aspect of the present invention provides an apparatus for space vector pulse width modulation, including:

a harmonic injection module, adapted to equivalently inject a harmonic component into an output of an inverter;
a calculation module, adapted to calculate an action duration, of each space vector of an output voltage space vector of the inverter, for synthesizing each space vector of the output voltage space vector of the inverter, where the action duration of each space vector includes an action duration $T_1$ of a first space vector, an action duration $T_2$ of a second space vector, and an action duration $T_3$ of a third space vector, and the first space vector includes a first redundant small vector and a second redundant small vector that are mutually redundant;
a configuration module, adapted to configure an action duration $T_a$ of the first redundant small vector and an action duration $T_b$ of the second redundant small vector, so as to make an instantaneous common-mode voltage component of the output of the inverter and an instantaneous common-mode voltage component of the harmonic component that is equivalently injected into the output of the inverter cancel each other out, and the action duration $T_a$ of the first redundant small vector and the action duration $T_b$ of the second redundant small vector satisfy: $T_a+T_b =T_1$; and
a pulse generation module, adapted to generate a pulse width modulation control signal according to the action duration of each space vector that is sent from the calculation module, and the action duration $T_a$ of the first redundant small vector and the action duration $T_b$ of the second redundant small vector that are sent by the configuration module.

In a first feasible implementation manner, in the harmonic injection module, an implementation manner of the equivalently injecting a harmonic component into an output of the inverter is: adding a harmonic component into a modulation wave.

With reference to the first feasible implementation manner of the second aspect, in a second feasible implementation manner, the inverter is a three-phase three-level inverter, the second space vector is a zero space vector, and the configuration module includes:

a modification unit, adapted to modify a calculation formula for an instantaneous common-mode voltage component of the output of the inverter, where the modified calculation formula for the instantaneous common-mode voltage component of the output of the inverter is:

$$V_{com|svpwm} = N_1 \lambda T_1 V_{dc} + N_2 (1 - \lambda) T_1 V_{dc} + N_3 T_3 V_{dc}$$

where $V_{com|svpwm}$ is the instantaneous common-mode voltage component of the output of the inverter, $\lambda$ is a coordinate factor, $N_1$ is a common-mode contribution parameter of the first redundant small vector, $N_2$ is a common-mode contribution parameter of the second redundant small vector, $N_3$ is a common-mode contribution parameter of the third space vector, and $V_{dc}$ is direct current bus voltage;

a coordinate factor calculation unit, adapted to calculate a value of the coordinate factor according to the modified calculation formula for the instantaneous common-mode voltage component being output by the inverter and modified by the modification unit and a principle of the making the instantaneous common-mode voltage component of the output of the inverter and the instantaneous common-mode voltage component of the harmonic cancel each other out, specifically:

a calculation formula for the instantaneous common-mode voltage component $V_{com|spwm}$ of the harmonic component that is equivalently injected into the output of the inverter is:

$$V_{com|spwm} = bm \cos(3\theta) \frac{1}{2} V_{dc} T$$

where n is a harmonic number, m is a modulation ratio, b is a ratio of a harmonic component to a fundamental wave, and $V_{dc}$ is direct current bus voltage; and the value of the coordinate factor $\lambda$ is calculated according to $V_{com|svpwm}$ +$V_{com|spwm}$=0; and

a configuration execution unit, adapted to configure the action duration $T_a$ of the first redundant small vector and the action duration $T_b$ of the second redundant small vector according to the value of the coordinate factor $\lambda$ calculated by the coordinate factor calculation unit, specifically:

$$T_a = T_1 * \lambda \text{ and } T_b = T_1 * (1-\lambda).$$

With reference to the first feasible implementation manner and the second feasible implementation manner of the second aspect, in a third feasible implementation manner, a third harmonic is preferably selected as the harmonic number that is injected into the output of the inverter.

Embodiments of the present invention make an instantaneous common-mode voltage component of an output of an inverter and an instantaneous common-mode voltage component of a harmonic component that is equivalently injected into the output of the inverter cancel each other out by configuring the action durations of the redundant small vectors, so as to eliminate the instantaneous common-mode voltage component of the output of the inverter, which can effectively reduce the common-mode component in the output of the inverter, improve bus voltage utilization, and accordingly improve system efficiency.

**BRIEF DESCRIPTION OF DRAWINGS**

To describe technical solutions in embodiments of the present invention or in the prior art more clearly, the following briefly introduces the accompanying drawings required for describing the embodiments or the prior art. Apparently, the accompanying drawings in the following descriptions show merely some embodiments of the present invention, and a person of ordinary skill in the art may still derive other drawings from the accompanying drawings without creative efforts.

FIG. 1 is a flowchart of a method for space vector pulse width modulation according to a first embodiment of the present invention;

FIG. 2 is a flowchart of a method for space vector pulse width modulation for a three-phase three-level inverter according to a second embodiment of the present invention;

FIG. 3 is a schematic diagram of an $\alpha$-$\beta$ mapping plane of three-level vector space;

FIG. 4 is a schematic structural diagram of an apparatus for space vector pulse width modulation according to a third embodiment of the present invention; and

FIG. 5 is a schematic diagram of an internal structure of a configuration module in a three-phase three-level inverter of the third embodiment shown in FIG. 4.

## DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

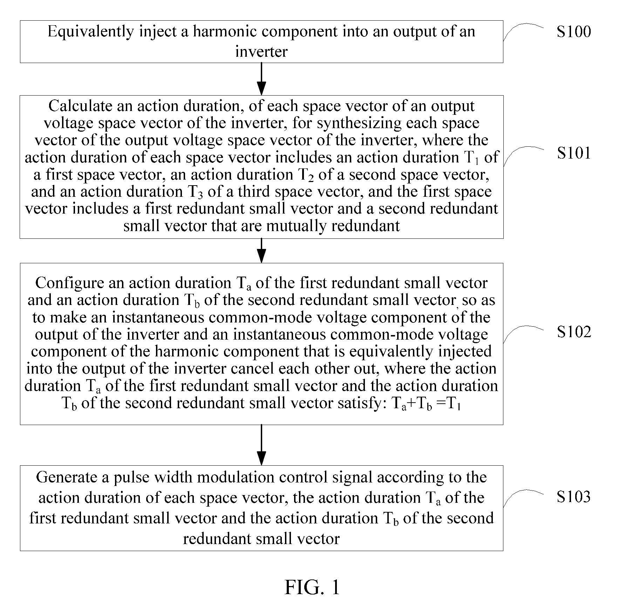

Referring to FIG. 1, which is a flowchart of a method for space vector pulse width modulation according to a first embodiment of the present invention, including:

S100: Equivalently inject a harmonic component into an output of an inverter. Equivalently injecting a harmonic component into an output of an inverter can be implemented by: adding a harmonic component into a modulation wave.

S101: Calculate an action duration, of each space vector of an output voltage space vector of the inverter, for synthesizing each space vector of the output voltage space vector of the inverter, where the action duration of each space vector includes an action duration T1 of a first space vector, an action duration T2 of a second space vector, and an action duration $T_3$ of a third space vector, and the first space vector includes a first redundant small vector and a second redundant small vector that are mutually redundant.

In a three-phase three-level inverter and a three-phase two-level inverter, a voltage space vector of an output of an inverter is synthesized with three space vectors, and in a three-phase multilevel inverter, a voltage space vector of an output of the inverter is synthesized with more than three space vectors.

S102: Configure an action duration $T_a$ of the first redundant small vector and an action duration $T_b$ of the second redundant small vector, so as to make an instantaneous common-mode voltage component of the output of the inverter and an instantaneous common-mode voltage component of the harmonic component that is equivalently injected into the output of the inverter cancel each other out, and the action duration $T_a$ of the first redundant small vector and the action duration $T_b$ of the second redundant small vector satisfy: $T_a + T_b = T_1$.

For a differential-mode signal, action effects of the first redundant small vector and the second redundant small vector that are mutually redundant are the same, and for a common-mode signal, configuring the action duration $T_a$ of the first redundant small vector and the action duration $T_b$ of the second redundant small vector may change the number of output common-mode signals.

S103: Generate a pulse width modulation control signal according to the action duration of each space vector, the action duration $T_a$ of the first redundant small vector and the action duration $T_b$ of the second redundant small vector.

The action duration of each space vector, the action duration $T_a$ of the first redundant small vector and the action duration $T_b$ of the second redundant small vector each is divided by a pulse period to obtain a duty cycle of an SVPWM pulse-width modulation drive signal of each switch tube, and a control chip can output a PWM (Pluse Width Modulation, pulse-width modulation) control signal according to the duty cycle.

The embodiment of the present invention makes the instantaneous common-mode voltage component of the output of the inverter and the instantaneous common-mode voltage component of the harmonic component that is equivalently injected into the output of the inverter cancel each other out by configuring the action durations of the redundant small vectors, so as to eliminate the instantaneous common-mode voltage component of the output of the inverter, which not only reduces an output common-mode component, but also does not result in decreasing utilization of direct current bus voltage and increasing output harmonic content.

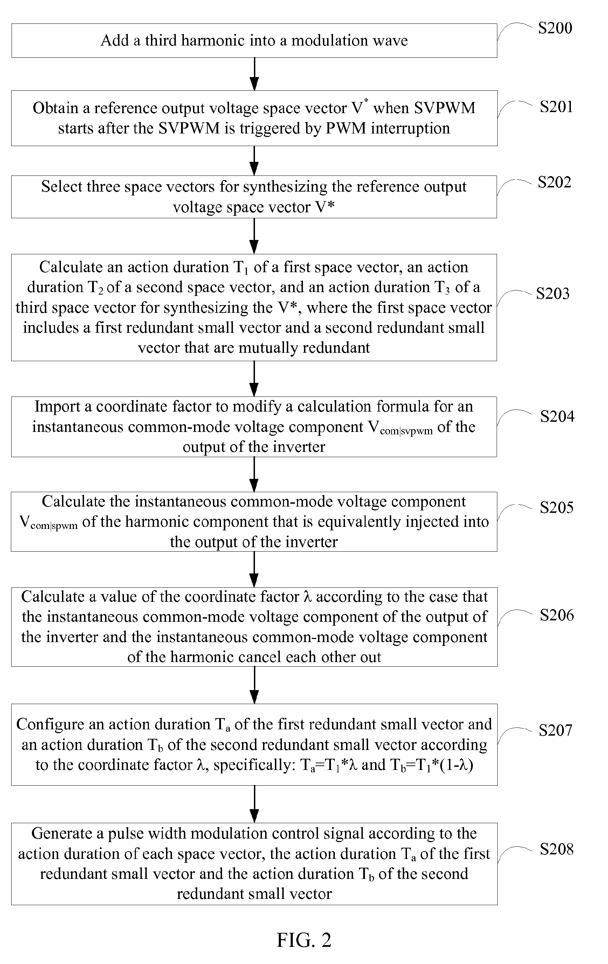

Referring to FIG. 2, which is a flowchart of a method for space vector pulse width modulation of a three-phase three-level inverter according to a second embodiment of the present invention, including:

S200: Add a third harmonic into a modulation wave. A preferably selected harmonic of a harmonic component that is equivalently injected into an output of an inverter is the third harmonic. A cosine curve after the harmonic component is added into the modulation wave is $V_a = m\cos\theta - bm\cos(n\theta)$, where n is a harmonic number, $V_{dc}$ is direct current bus voltage, m is a modulation ratio whose value range is 0-1.1547, and b is a scale factor that indicates a ratio of a harmonic component signal to a fundamental wave. A third harmonic is adopted in the embodiment, so a cosine curve is $V_a = m\cos\theta - bm\cos(3\theta)$.

S201: Obtain a reference output voltage space vector V* when SVPWM starts after the SVPWM is triggered by PWM interruption.

The method for space vector pulse width modulation in the embodiment may be implemented by a single-chip microcomputer or DSP (Digital Signal Processing, digital signal processing) programming, where when a control period ends, PWM is interrupted, which triggers the SVPWM, and the SVPWM starts.

S202: Select three space vectors for synthesizing the reference output voltage space vector V*.

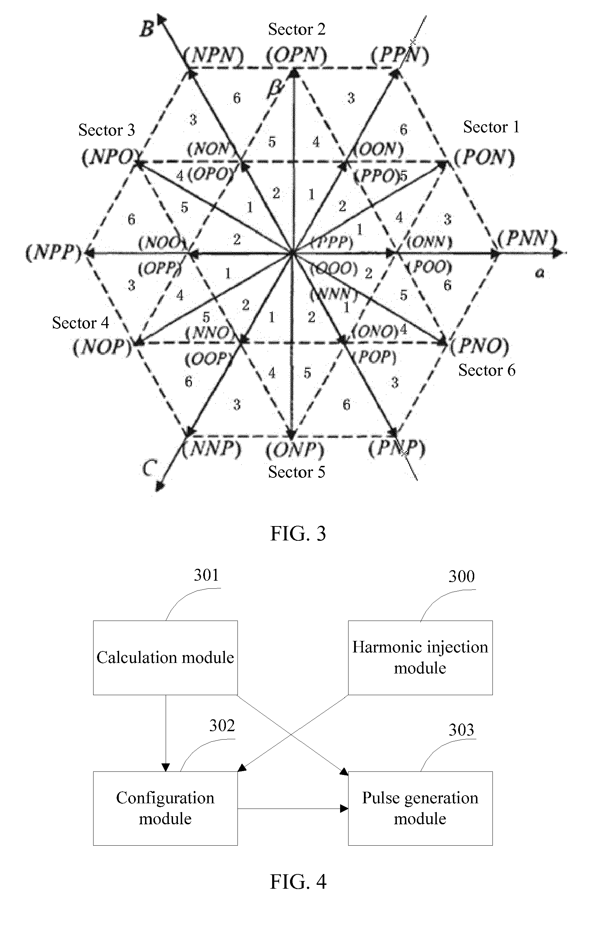

As shown in FIG. 3, which is a schematic structural diagram of an $\alpha$-$\beta$ mapping plane of three-level vector space, space vectors are divided into 6 sectors from the $\alpha$ axis in the counter-clockwise direction, where each sector is divided into 6 small triangular intervals. On the $\alpha$-$\beta$ mapping plane, the corresponding basic vectors of the 27 groups of switch statuses of a three-level inverter are shown in FIG. 3, and the mapping relationship between different switch statuses and basic vectors is marked in FIG. 3, where P, O and N indicates that the switch statuses of the outputs of three phases are positive, zero and negative, respectively. The basic vectors on the whole three-level space include 6 long vectors (PNN, PPN, NPN, NPP, NNP and PNP), 6 medium vectors (PON, OPN, NPO, NOP, ONP and PNO), 12 redundant small vectors (POO, ONN, PPO, OON, OPO, NON, OPP, NOO, OOP, NNO, POP and ONO) and 3 zero vectors (PPP, OOO and NNN). The 6 long vectors and the 6 medium vectors correspond to their respective mapping vectors on the $\alpha$-$\beta$ mapping plane, so the corresponding mapping basic vectors can be used to indicate these basic vectors. However, one mapping redundant small vector corresponds to two redundant small vectors; for example, ONN and POO are displayed as one mapping redundant small vector on the $\alpha$-$\beta$ mapping plane.

To reduce a harmonic of the output voltage of the inverter, a nearest three vector method is adopted to select three space vectors for synthesizing the reference output voltage space vector V*, that is, three vectors at the three vertexes of the triangle in the area where the V* is in are selected as the three space vectors for synthesizing the reference output voltage space vector V*. Taking the first sector as an example, the V* is in an interval 1 or an interval 2, and the space vectors of three neighboring vertexes are selected to synthesize the V*, where a difference between the interval 1 and the interval 2 is that their start redundant small vectors are different, where when the V* is in the interval 1, a start redundant small vector is ONN or POO; when the V* is in the interval 2, a start redundant small vector is OON or PPO.

S203: Calculate an action duration T1 of a first space vector, an action duration T2 of a second space vector, and an action duration $T_3$ of a third space vector for synthesizing the V*, where the first space vector includes a first redundant small vector and a second redundant small vector that are mutually redundant.

According to S202, when the V* is in the first sector, the vectors for synthesizing the V* include: POO (ONN), ONN (PPO), and OOO (PPP or NNN). When the V* is in the interval 1, the first redundant small vector of the first space vector is POO, and the second redundant small vector is ONN; when the V* is in the interval 2, the first redundant small vector of the first space vector is OON, and the second redundant small vector is PPO.

Taking the interval 1 as an example, an action duration of a vector POO (ONN) is $T_1$, an action duration of OOO is $T_2$, and an action duration of ONN is $T_3$, and a formula for calculating $T_1$, $T_2$, and $T_3$ is:

$$\begin{cases} \vec{V}_{POO(ONN)} T_1 + \vec{V}_{OOO} T_2 + \vec{V}_{OON} T_3 = \vec{V}*T \\ T_1 + T_2 + T_3 = T \end{cases}$$

S204: Import a coordinate factor to modify a calculation formula for an instantaneous common-mode voltage component $V_{com|svpwm}$ of the output of the inverter.

The modified calculation formula for the instantaneous common-mode voltage component of the output of the inverter is:

$$V_{com|svpwm} = N_1 \lambda T_1 V_{dc} + N_2 (1 - \lambda) T_1 V_{dc} + N_3 T_3 V_{dc}$$

where $V_{com|svpwm}$ is the instantaneous common-mode voltage component of the output of the inverter, $\lambda$ is a coordinate factor, $N_1$ is a common-mode contribution parameter of the first redundant small vector, $N_2$ is a common-mode contribution parameter of the second redundant small vector, $N_3$ is a common-mode contribution parameter of the third space vector, and $V_{dc}$ is direct current bus voltage. Common-mode contribution parameters are effects of different space vectors for an output common-mode signal, and in the three-phase three-level inverter, $N_1$ is 1/6, $N_2$ is -1/3, and $N_3$ is -1/6, and therefore, the modified calculation formula for the instantaneous common-mode voltage component of the output of the inverter is:

$$V_{com|svpwm} = \frac{1}{6}\lambda T_1 V_{dc} + (-\frac{1}{3})(1-\lambda)T_1 V_{dc} + (-\frac{1}{6})T_3 V_{dc}$$

where a value of the instantaneous common-mode voltage component of the output of the inverter may be changed by configuring a value of the $\lambda$ and adjusting a proportional relationship of redundant vectors, so as to make it and an equivalently injected particular harmonic cancel each other out.

S205: Calculate the instantaneous common-mode voltage component $V_{com|spwm}$ of the harmonic component that is equivalently injected into the output of the inverter.

According to S200, a formula for a three-phase cosine curve waveform (the difference between each phase angle is 120 degrees) may be expressed as:

$$\begin{cases} V_a = [m\cos\theta - bm\cos(3\theta)]\frac{1}{2}V_{dc}T \\ V_b = [m\cos(\theta - \frac{2}{3}\pi) - bm\cos(3\theta)]\frac{1}{2}V_{dc}T \\ V_c = [m\cos(\theta - \frac{4}{3}\pi) - bm\cos(3\theta)]\frac{1}{2}V_{dc}T \end{cases}$$

where, bmcos (3θ) is shared by three phases $V_a$, $V_b$, and $V_c$ according to the formula for the three-phase cosine curve waveform, so the common-mode component of the harmonic component signal is

$V_{com|spwm} = bm\cos(3\theta)\frac{1}{2}V_{dc}T$ . In an actual application, a third harmonic is preferably adopted, because direct current bus voltage utilization decrease if an added number of a harmonic is too small s; common-mode voltage increases f an added number of a harmonic is too large.

S206: Calculate a value of the coordinate factor $\lambda$ according to the case that the instantaneous common-mode voltage component of the output of the inverter and the instantaneous common-mode voltage component of the harmonic cancel each other out.

The value of the $\lambda$ may be calculated when $V_{com|spwm} + V_{com|svpwm} = 0$, so as to make the instantaneous common-mode voltage component of the output of the inverter and an equivalently injected particular harmonic cancel each other out, that is, according to the following formula:

$$\frac{1}{6}\lambda T_1 V_{dc} + (-\frac{1}{3})(1-\lambda)T_1 V_{dc} + (-\frac{1}{6})T_3 V_{dc} + bm\cos(3\theta)\frac{1}{2}V_{dc}T = 0,$$

the following formula may be obtained:

$$\lambda = \frac{\frac{1}{6}T_3 - bm\cos(3\theta)\frac{1}{2}T}{\frac{1}{2}T_1}$$

S207: Configure an action duration $T_a$ of the first redundant small vector and an action duration $T_b$ of the second redundant small vector according to the coordinate factor $\lambda$, specifically:

$$T_a = T_1 * \lambda \text{ and } T_b = T_1 * (1-\lambda).$$

The action duration $T_a$ of the first redundant small vector and the action duration $T_b$ of the second redundant small vector satisfy: $T_a + T_b = T_1$, where an action duration $T_a = T_1 * \lambda$ of the POO and an action duration $T_b = T_1 * (1-\lambda)$ of the ONN can be obtained according to the value of the $\lambda$.

S208: Generate a pulse width modulation control signal according to the action duration of each space vector, the action duration $T_a$ of the first redundant small vector and the action duration $T_b$ of the second redundant small vector. For a specific method, refer to S103.

The space vector pulse width modulation method in the embodiment of the present invention is applicable to a three-phase I-type three-level inverter and a three-phase T-type three-level inverter, and the method in the present invention is also applicable to a three-phase two-level inverter and a three-phase multilevel inverter. In a three-phase two-level inverter application and a three-phase multilevel inverter application, the steps for selecting space vectors and calculating instantaneous common-mode voltage components of the output of the inverters are correspondingly adjusted according to an actual application, but specific methods do not depart from the idea of the present invention.

The embodiment takes a specific application of the present invention in a three-phase three-level inverter as an example to illustrate a specific implementation manner of the present invention, and the idea of the present invention is also applicable to a three-phase two-level inverter and a three-phase multilevel inverter. In a three-phase three-level inverter, the instantaneous common-mode voltage component of the output of the inverter and the instantaneous common-mode voltage component of the harmonic component that is equivalently injected into the output of the inverter cancel each other out by configuring the action durations of the redundant small vectors, so as to eliminate the instantaneous common-mode voltage component of the output of the inverter. The embodiment can effectively reduce the common-mode component in the output of the inverter, improve bus voltage utilization, and accordingly improve system efficiency, where a control method is easy and flexible, and no extra hardware circuit needs to be added.

Referring FIG. 4, FIG. 4 is a schematic structural diagram of an apparatus for space vector pulse width modulation according to a third embodiment of the present invention, and the apparatus includes:

> a harmonic injection module 300, adapted to equivalently inject a harmonic component into an output of an inverter, where equivalently injecting a harmonic component into an output of an inverter can be implemented by adding a harmonic component into a modulation wave;
> a calculation module 301, adapted to calculate an action duration, of each space vector of an output voltage space vector of the inverter, for synthesizing each space vector of the output voltage space vector of the inverter, where the action duration of each space vector includes an action duration T1 of a first space vector, an action duration T2 of a second space vector, and an action duration $T_3$ of a third space vector, and the first space vector includes a first redundant small vector and a second redundant small vector that are mutually redundant, where:

>> in a three-phase three-level inverter and a three-phase two-level inverter, a voltage space vector of an output of an inverter is synthesized with three space vectors, and in a three-phase multilevel inverter, a voltage vector of an output of the inverter is synthesized with more than three space vectors, and
>> in an application of the three-phase three-level inverter, for a working process of the calculation module, refer to S202 and S203 in the second embodiment, which is therefore not described herein again;
>> a configuration module 302, adapted to configure an action duration $T_a$ of the first redundant small vector and an action duration $T_b$ of the second redundant small vector, so as to make an instantaneous common-mode voltage component of the output of the inverter and an instantaneous common-mode voltage component of the harmonic component that is equivalently injected into the output of the inverter cancel each other out, so as to eliminate the instantaneous common-mode voltage component of the output of the inverter, and the action duration $T_a$ of the first redundant small vector and the action duration $T_b$ of the second redundant small vector satisfy: $T_a + T_b = T_1$, where:
>> for a differential-mode signal, action effects of the first redundant small vector and the second redundant small vector that are mutually redundant are the same, and for a common-mode signal, configuring the action duration $T_a$ of the first redundant small vector and the action duration $T_b$ of the second redundant small vector may change the number of output common-mode signals, and
>> in the application of the three-phase three-level inverter, for the working process of the configuration module 302, refer to S204, S205, S206 and S207 in the second embodiment, which is therefore not described herein again; and
>> a pulse generation module 303, adapted to generate a pulse width modulation control signal according to the action duration of each space vector that is sent from the calculation module, and the action duration $T_a$ of the

first redundant small vector and the action duration $T_b$ of the second redundant small vector that are sent by the configuration module, where:

the action duration of each space vector, the action duration $T_a$ of the first redundant small vector and the action duration $T_b$ of the second redundant small vector each is divided by a pulse period to obtain a duty cycle of an SVPWM pulse-width modulation drive signal of each switch tube, and a control chip can output a PWM control signal according to the duty cycle.

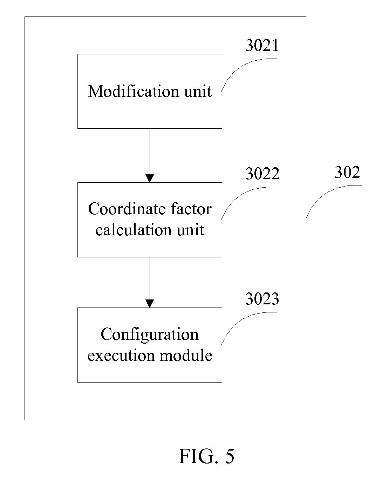

The apparatus is applicable to a three-phase I-type three-level inverter, a three-phase T-type three-level inverter, a three-phase two-level inverter and a three-phase multilevel inverter. FIG. 5 shows a specific schematic structural diagram of a configuration module when the apparatus is applied to the three-phase I-type three-level inverter, including:

a modification unit 3021, adapted to modify a calculation formula for an instantaneous common-mode voltage component of an output of the inverter, where the modified calculation formula for the instantaneous common-mode voltage component of the output of the inverter is:

$$V_{com|svpwm} = N_1 \lambda T_1 V_{dc} + N_2(1-\lambda)T_1 V_{dc} + N_3 T_3 V_{dc}$$

where $V_{com|svpwm}$ is the instantaneous common-mode voltage component of the output of the inverter, $\lambda$ is a coordinate factor, $N_1$ is a common-mode contribution parameter of a first redundant small vector, $N_2$ is a common-mode contribution parameter of a second redundant small vector, $N_3$ is a common-mode contribution parameter of a third space vector, and $V_{dc}$ is direct current bus voltage;

a coordinate factor calculation unit 3022, adapted to calculate a value of the coordinate factor according to the modified calculation formula for the instantaneous common-mode voltage component being output by the inverter and modified by the modification unit 3021 and a principle of the making the instantaneous common-mode voltage component of the output of the inverter and the instantaneous common-mode voltage component of the harmonic cancel each other out, specifically:

a calculation formula for the instantaneous common-mode voltage component $V_{com|spwm}$ of the harmonic component that is equivalently injected into the output of the inverter is:

$$V_{com|spwm} = bm\cos(n\theta)\frac{1}{2}V_{dc}T$$

where n is a harmonic number, m is a modulation ratio, b is a ratio of a harmonic component to a fundamental wave, and $V_{dc}$ is direct current bus voltage; and the value of the coordinate factor $\lambda$ is calculated according to $V_{com|svpwm}$ $+V_{com|spwm}=0$, where:

the harmonic number is a third harmonic, and a derivation process of the $V_{com|spwm}$ is:

a preferably selected harmonic of the harmonic component that is equivalently injected into the output of the inverter is the third harmonic, and a specific implementation manner is: adding a harmonic component into a modulation wave; specifically, a cosine curve of the modulation wave is $V_a = m\cos\theta - bm\cos(3\theta)$, and a formula for a three-phase cosine curve waveform (the difference between each phase angle is 120 degrees) may be:

$$\begin{cases} V_a = [m\cos\theta - bm\cos(3\theta)]\frac{1}{2}V_{dc}T \\ V_b = [m\cos(\theta - \frac{2}{3}\pi) - bm\cos(3\theta)]\frac{1}{2}V_{dc}T \\ V_c = [m\cos(\theta - \frac{4}{3}\pi) - bm\cos(3\theta)]\frac{1}{2}V_{dc}T \end{cases}$$

where $V_{dc}$ is direct current bus voltage, m is a modulation ratio whose value range is 0-1.1547, and b is a scale factor that indicates a ratio of a harmonic component signal to a fundamental wave. As shown in the three-phase cosine curve waveform formula, bmcos (3θ) is shared by three phases $V_a$, $V_b$ and $V_c$, so the common-mode component of the harmonic component signal is $V_{com|spwm} = bm\cos(3\theta)\dfrac{1}{2}V_{dc}T$ , and according to the following formula:

$$\frac{1}{6}\lambda T_1 V_{dc} + (-\frac{1}{3})(1-\lambda)T_1 V_{dc} + (-\frac{1}{6})T_3 V_{dc} + bm\cos(3\theta)\frac{1}{2}V_{dc}T = 0$$

the following formula may be derived:

$$\lambda = \frac{\dfrac{1}{6}T_3 - bm\cos(3\theta)\dfrac{1}{2}T}{\dfrac{1}{2}T_1},$$

and

a configuration execution module 3023, adapted to configure the action duration $T_a$ of the first redundant small vector and the action duration $T_b$ of the second redundant small vector according to the value of the coordinate factor λ calculated by the coordinate factor calculation unit, specifically: $T_a=T_1*\lambda$ and $T_b=T_1*(1-\lambda)$.

The embodiment of the present invention makes the instantaneous common-mode voltage component of the output of the inverter and the instantaneous common-mode voltage component of the harmonic component that is equivalently injected into the output of the inverter cancel each other out by configuring the action durations of the redundant small vectors, so as to eliminate the instantaneous common-mode voltage component of the output of the inverter, which can effectively reduce the common-mode component in the output of the inverter, improve bus voltage utilization, and accordingly improve system efficiency.

A person of ordinary skill in the art may understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a read-only memory (Read-Only Memory, ROM), or a random access memory (Random Access Memory, RAM) and so on.

The foregoing disclosures are merely exemplary embodiments of the present invention, and are not intended to limit the scope of rights of the present invention. A person of ordinary skill in the art may understand that all or a part of the processes of the methods in the foregoing embodiments may be implemented, and any equivalent variation made according to the claims of the present invention still falls within the scope of the present invention.

**Claims**

1. A method for space vector pulse width modulation, comprising:

equivalently injecting a harmonic component into an output of an inverter;
calculating an action duration, of each space vector of an output voltage space vector of the inverter, for synthesizing each space vector of the output voltage space vector of the inverter, wherein the action duration of each space vector comprises an action duration $T_1$ of a first space vector, an action duration $T_2$ of a second space vector, and an action duration $T_3$ of a third space vector, and the first space vector comprises a first redundant small vector and a second redundant small vector that are mutually redundant;
configuring an action duration $T_a$ of the first redundant small vector and an action duration $T_b$ of the second redundant small vector, so as to make an instantaneous common-mode voltage component of the output of the inverter and an instantaneous common-mode voltage component of the harmonic component that is equivalently injected into the output of the inverter cancel each other out, and the action duration $T_a$ of the first redundant small vector and the action duration $T_b$ of the second redundant small vector satisfy: $T_a+T_b =T_1$; and
generating a pulse width modulation control signal according to the action duration of each space vector, the action duration $T_a$ of the first redundant small vector and the action duration $T_b$ of the second redundant small vector.

2. The method according to claim 1, wherein an implementation manner for the equivalently injecting a harmonic component into an output of an inverter is: adding a harmonic component into a modulation wave.

3. The method according to claim 1 or claim 2, wherein the inverter is a three-phase three-level inverter; the second space vector is a zero space vector, and the configuring an action duration $T_a$ of the first redundant small vector and an action duration $T_b$ of the second redundant small vector comprises:

   modifying a calculation formula for the instantaneous common-mode voltage component of the output of the inverter, wherein the modified calculation formula for the instantaneous common-mode voltage component of the output of the inverter is:

$$V_{com|svpwm} = N_1\lambda T_1 V_{dc} + N_2(1-\lambda)T_1 V_{dc} + N_3 T_3 V_{dc}$$

   wherein $V_{com|svpwm}$ is the instantaneous common-mode voltage component of the output of the inverter, $\lambda$ is a coordinate factor, $N_1$ is a common-mode contribution parameter of the first redundant small vector, $N_2$ is a common-mode contribution parameter of the second redundant small vector, $N_3$ is a common-mode contribution parameter of the third space vector, and $V_{dc}$ is direct current bus voltage;
   calculating a value of the coordinate factor according to a principle of the making the instantaneous common-mode voltage component of the output of the inverter and the instantaneous common-mode voltage component of the harmonic cancel each other out, specifically:

   a calculation formula for the instantaneous common-mode voltage component $V_{com|spwm}$ of the harmonic component that is equivalently injected into the output of the inverter being:

$$V_{com|spwm} = bm\cos(n\theta)\frac{1}{2}V_{dc}T$$

   wherein n is the number of harmonics m is a modulation ratio, b is a ratio of a harmonic component to a fundamental wave, and $V_{dc}$ is direct current bus voltage; and the value of the coordinate factor $\lambda$ is calculated according to $V_{com|svpwm} +V_{com|spwm}=0$; and
   configuring the action duration $T_a$ of the first redundant small vector and the action duration $T_b$ of the second redundant small vector according to the coordinate factor $\lambda$, specifically: $T_a=T_1*\lambda$ and

$$T_b=T_1*(1-\lambda).$$

4. The method according to any one of claims 1 to 3, wherein the harmonic component that is equivalently injected into the output of the inverter is a third harmonic.

5. An apparatus for space vector pulse width modulation, comprising:

   a harmonic injection module, adapted to equivalently inject a harmonic component into an output of an inverter;
   a calculation module, adapted to calculate an action duration, of each space vector of an output voltage space vector of the inverter, for synthesizing each space vector of the output voltage space vector of the inverter, wherein the action duration of each space vector comprises an action duration $T_1$ of a first space vector, an action duration $T_2$ of a second space vector, and an action duration $T_3$ of a third space vector, and the first space vector comprises a first redundant small vector and a second redundant small vector that are mutually redundant;

a configuration module, adapted to receive the action duration $T_1$ of the first space vector from the calculation module, and configure an action duration $T_a$ of the first redundant small vector and an action duration $T_b$ of the second redundant small vector, so as to make an instantaneous common-mode voltage component of the output of the inverter and an instantaneous common-mode voltage component of the harmonic component that is equivalently injected into the output of the inverter cancel each other out, and the action duration $T_a$ of the first redundant small vector and the action duration $T_b$ of the second redundant small vector satisfy: $T_a+T_b = T_1$; and

a pulse generation module, adapted to generate a pulse width modulation control signal according to the action duration of each space vector that is sent from the calculation module, and the action duration $T_a$ of the first redundant small vector and the action duration $T_b$ of the second redundant small vector that are sent by the configuration module.

6. The apparatus according to claim 5, wherein in the harmonic injection module, an implementation manner of equivalently injecting the harmonic component into the output of the inverter is: adding a harmonic component into a modulation wave.

7. The apparatus according to claim 5 or claim 6, wherein the inverter is a three-phase three-level inverter, the second space vector is a zero space vector, and the configuration module comprises:

a modification unit, adapted to modify a calculation formula for the instantaneous common-mode voltage component of the output of the inverter, wherein the modified calculation formula for the instantaneous common-mode voltage component of the output of the inverter is:

$$V_{com|svpwm} = N_1 \lambda T_1 V_{dc} + N_2 (1 - \lambda) T_1 V_{dc} + N_3 T_3 V_{dc}$$

wherein $V_{com|svpwm}$ is the instantaneous common-mode voltage component of the output of the inverter, $\lambda$ is a coordinate factor, $N_1$ is a common-mode contribution parameter of the first redundant small vector, $N_2$ is a common-mode contribution parameter of the second redundant small vector, $N_3$ is a common-mode contribution parameter of the third space vector, and $V_{dc}$ is direct current bus voltage;

a coordinate factor calculation unit, adapted to calculate a value of the coordinate factor according to the modified calculation formula for the instantaneous common-mode voltage component of the output of the inverter and a principle of the making the instantaneous common-mode voltage component of the output of the inverter and the instantaneous common-mode voltage component of the harmonic cancel each other out, specifically:

a calculation formula for the instantaneous common-mode voltage component $V_{com|spwm}$ of the harmonic component that is equivalently injected into the output of the inverter is:

$$V_{com|spwm} = bm \cos(3\theta) \frac{1}{2} V_{dc} T$$

wherein n is a harmonic number, m is a modulation ratio, b is a ratio of a harmonic component to a fundamental wave, and $V_{dc}$ is direct current bus voltage; and the value of the coordinate factor $\lambda$ is calculated according to $V_{com|svpwm} + V_{com|spwm} = 0$; and

a configuration execution module, adapted to configure the action duration $T_a$ of the first redundant small vector and the action duration $T_b$ of the second redundant small vector according to the value of the coordinate factor $\lambda$ calculated by the coordinate factor calculation unit; specifically:

$$T_a = T_1 * \lambda \text{ and } T_b = T_1 * (1-\lambda).$$

8. The method according to any one of claims 5 to 7, wherein the harmonic component that is equivalently injected into the output of the inverter is a third harmonic.

Equivalently inject a harmonic component into an output of an inverter ⌐ S100

Calculate an action duration, of each space vector of an output voltage space vector of the inverter, for synthesizing each space vector of the output voltage space vector of the inverter, where the action duration of each space vector includes an action duration $T_1$ of a first space vector, an action duration $T_2$ of a second space vector, and an action duration $T_3$ of a third space vector, and the first space vector includes a first redundant small vector and a second redundant small vector that are mutually redundant ⌐ S101

Configure an action duration $T_a$ of the first redundant small vector and an action duration $T_b$ of the second redundant small vector, so as to make an instantaneous common-mode voltage component of the output of the inverter and an instantaneous common-mode voltage component of the harmonic component that is equivalently injected into the output of the inverter cancel each other out, where the action duration $T_a$ of the first redundant small vector and the action duration $T_b$ of the second redundant small vector satisfy: $T_a + T_b = T_1$ ⌐ S102

Generate a pulse width modulation control signal according to the action duration of each space vector, the action duration $T_a$ of the first redundant small vector and the action duration $T_b$ of the second redundant small vector ⌐ S103

FIG. 1

| Add a third harmonic into a modulation wave | S200 |

↓

| Obtain a reference output voltage space vector $V^*$ when SVPWM starts after the SVPWM is triggered by PWM interruption | S201 |

↓

| Select three space vectors for synthesizing the reference output voltage space vector V* | S202 |

↓

| Calculate an action duration $T_1$ of a first space vector, an action duration $T_2$ of a second space vector, and an action duration $T_3$ of a third space vector for synthesizing the V*, where the first space vector includes a first redundant small vector and a second redundant small vector that are mutually redundant | S203 |

↓

| Import a coordinate factor to modify a calculation formula for an instantaneous common-mode voltage component $V_{com|svpwm}$ of the output of the inverter | S204 |

↓

| Calculate the instantaneous common-mode voltage component $V_{com|spwm}$ of the harmonic component that is equivalently injected into the output of the inverter | S205 |

↓

| Calculate a value of the coordinate factor λ according to the case that the instantaneous common-mode voltage component of the output of the inverter and the instantaneous common-mode voltage component of the harmonic cancel each other out | S206 |

↓

| Configure an action duration $T_a$ of the first redundant small vector and an action duration $T_b$ of the second redundant small vector according to the coordinate factor λ, specifically: $T_a=T_1*λ$ and $T_b=T_1*(1-λ)$ | S207 |

↓

| Generate a pulse width modulation control signal according to the action duration of each space vector, the action duration $T_a$ of the first redundant small vector and the action duration $T_b$ of the second redundant small vector | S208 |

FIG. 2

FIG. 3

FIG. 4

FIG. 5

<table>
<tr><td colspan="2"><b>INTERNATIONAL SEARCH REPORT</b></td><td>International application No.<br><br><b>PCT/CN2013/071025</b></td></tr>
</table>

**A. CLASSIFICATION OF SUBJECT MATTER**

H02M 7/48 (2007.01) i

According to International Patent Classification (IPC) or to both national classification and IPC

**B. FIELDS SEARCHED**

Minimum documentation searched (classification system followed by classification symbols)

IPC: H02M

Documentation searched other than minimum documentation to the extent that such documents are included in the fields searched

Electronic data base consulted during the international search (name of data base and, where practicable, search terms used)

CNABS, CPRSABS, VEN, CNTXT, EPTXT, USTXT, WOTXT, JPTXT, CNKI, CNPAT, WPI, EPODOC: pulse width, inversion, common mode, voltage, restrain, component, offset, PWM, space, vector, pulse, width, modulat+, inverter, harmonic, redundan+, instantaneous, common, mode

**C. DOCUMENTS CONSIDERED TO BE RELEVANT**

| Category* | Citation of document, with indication, where appropriate, of the relevant passages | Relevant to claim No. |
|---|---|---|
| PX | CN 102780410 A (HUAWEI TECHNOLOGIES CO., LTD.), 14 November 2012 (14.11.2012), the whole document | 1-8 |
| A | CN 102570873 A (CSIC ELECTRICAL MACHINERY SCIENCE & TECHNOLOGY CO., LTD. et al.), 11 July 2012 (11.07.2012), description, particular embodiments, and abstract | 1-8 |
| A | CN 101359881 A (TSINGHUA UNIVERSITY), 04 February 2009 (04.02.2009), the whole document | 1-8 |
| A | CN 101917132 A (SHANGHAI CHINT POWER SYSTEMS CO., LTD.), 15 December 2010 (15.12.2010), the whole document | 1-8 |
| A | US 7881081 B1 (ROCKWELL AUTOMATION TECHNOLOGIES INC.), 01 February 2011 (01.02.2011), the whole document | 1-8 |

☐ Further documents are listed in the continuation of Box C.     ☒ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **12 April 2013 (12.04.2013)** | **09 May 2013 (09.05.2013)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**LIU, Zixiao**<br><br>Telephone No.: (86-10) **62414226** |

Form PCT/ISA/210 (second sheet) (July 2009)

## INTERNATIONAL SEARCH REPORT
### Information on patent family members

| | | International application No. |
|---|---|---|
| | | **PCT/CN2013/071025** |

| Patent Documents referred in the Report | Publication Date | Patent Family | Publication Date |
|---|---|---|---|
| CN 102780410 A | 14.11.2012 | None | |
| CN 102570873 A | 11.07.2012 | None | |
| CN 101359881 A | 04.02.2009 | CN 101359881 B | 04.08.2010 |
| CN 101917132 A | 15.12.2010 | None | |
| US 7881081 B1 | 01.02.2011 | EP 2395652 A2 | 14.12.2011 |
| | | CN 202160117 U | 07.03.2012 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210261448X

- CN 2794029